# FASCICULE DE BREVET EUROPEEN

(11) **EP 3 093 191 B1**
(45) Date de publication et mention de la délivrance du brevet: **02.09.2020**
(21) Numéro de dépôt: 16168374.3
(22) Date de dépôt: 04.05.2016
(51) Int. Cl.: B60P 3/39

(54) **ENSEMBLE DE LIT A HAUTEUR REGLABLE COMPORTANT UN SOMMIER COULISSANT LONGITUDINALEMENT**
BETTANORDNUNG MIT VERSTELLBARER HÖHE, DIE EINEN LÄNGSVERSCHIEBBAREN BETTRAHMEN UMFASST
BED ASSEMBLY WITH ADJUSTABLE HEIGHT COMPRISING A LONGITUDINALLY SLIDING BED FRAME

(30) Priorité: 13.05.2015 FR 1554320
(43) Date de publication de la demande: 16.11.2016
(73) Titulaire: Trigano VDL, 75019 Paris (FR)
(72) Inventeur: CLEMENSON, Jérôme, 07290 ARDOIX (FR); JOB, Guy, 26800 Etoile (FR)
(74) Mandataire: Gevers & Orès

(56) Documents cités:
- EP-A2- 1 754 628
- WO-A1-02/096241
- DE-U1-202004 008 740
- US-A- 3 575 460

## Description

### DOMAINE TECHNIQUE DE L'INVENTION

L'invention concerne un ensemble de lit réglable en hauteur pour une cabine de véhicule, notamment de véhicule roulant.

L'invention concerne plus particulièrement un ensemble de lit à hauteur réglable destiné à être agencé dans une cabine de véhicule, le lit comportant un sommier horizontal s'étendant selon un axe principal longitudinal depuis une extrémité avant jusqu'à une extrémité arrière.

### ARRIERE PLAN TECHNIQUE DE L'INVENTION

Les cabines de camping-car ou de caravanes présentent un espace généralement réduit dans lequel doit être intégré le mobilier nécessaire au confort des utilisateurs. Du fait de cet espace réduit, les lits coulissants verticalement permettent de libérer un espace de vie appréciable pour les utilisateurs lorsque le lit est escamoté au plafond. Ce même lit peut être descendu en position d'utilisation uniquement lorsque les utilisateurs en ont besoin. Un tel lit est connu de DE 20 2004 008740 U1 qui est considéré comme l'art antérieur le plus proche et décrit les caractéristiques du préambule de la revendication 1.

Cependant, en position d'utilisation, un tel lit est encombrant, barrant parfois le passage des utilisateurs vers un coin toilette ou vers un coin rangement. Une fois que le lit est descendu en position d'utilisation, les déplacements des utilisateurs dans la cabine devient donc malaisé.

### BREF RESUME DE L'INVENTION

L'invention propose un ensemble de lit à hauteur réglable du type décrit précédemment, caractérisé en ce que le lit comporte un support monté coulissant verticalement sur lequel le sommier est monté coulissant longitudinalement en bloc entre une position arrière de rangement et une position avant.

Un tel lit est avantageusement agencé dans un camping-car à la limite entre la cabine de vie et le poste de pilotage. En position d'utilisation, le sommier peut ainsi être coulissé vers la cabine de pilotage pour libérer un espace de vie, par exemple un couloir de passage, pour les utilisateurs.

Selon d'autres caractéristiques de l'invention :
- l'ensemble comporte un mécanisme de levage du support pour déplacer le lit entre une position extrême inférieure d'utilisation et une position extrême supérieure d'escamotage ;
- le mécanisme de levage comporte un moteur de commande de la position verticale du lit ;
- l'ensemble comporte un organe de détection du sommier en position arrière de rangement, le moteur du mécanisme de levage étant désactivé lorsque le sommier quitte sa position de rangement ;
- le support est destiné à être suspendu à un plafond du véhicule par l'intermédiaire de liens souples de suspension à longueur réglable ;
- le support comporte au moins un enrouleur afin de régler la longueur des liens souples pour déplacer le support verticalement ;
- l'ensemble comporte au moins une coulisse verticale fixe qui guide le support en coulissement vertical.

L'invention concerne aussi un véhicule qui est susceptible de se déplacer selon une direction déterminée et qui est muni d'un ensemble de lit réalisé selon les enseignements de l'invention, caractérisé en ce que la direction longitudinale du sommier est agencée parallèlement à la direction de déplacement du véhicule.

Selon d'autres caractéristiques du véhicule :
- le véhicule comporte deux coulisses de guidage en coulissement vertical du support qui sont fixées à une même cloison ;
- le lit est monté coulissant verticalement entre une position extrême supérieure d'escamotage à proximité du plafond du véhicule dans laquelle le sommier est bloqué dans sa position de rangement par butée contre ladite cloison du véhicule, et au moins une position inférieure d'utilisation dans laquelle le sommier est susceptible de coulisser horizontalement à travers une ouverture réalisée dans ladite cloison.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective écorchée qui représente un véhicule automobile comportant une cabine d'habitation équipée d'un lit réglable en hauteur réalisé selon les enseignements de l'invention ;
- la figure 2 est une vue en perspective qui représente l'ensemble de lit réglable en hauteur de la figure 1 ;
- la figure 3 est une vue éclatée qui représente le sommier et le support du lit de la figure 2 depuis un angle permettant de voir la partie supérieure de ces deux éléments ;
- la figure 4 est une vue éclatée qui représente le sommier et le support du lit de la figure 2 depuis un angle permettant de voir la partie inférieure de ces deux éléments ;
- la figure 5 est une vue de coté qui représente le lit de la figure 1 occupant une position d'escamotage contre le plafond de la cabine d'habitation ;
- la figure 6 est une vue similaire à celle de la figure 5 qui représente le lit dans une position extrême inférieure d'utilisation, le sommier occupant une position arrière de rangement ;
- la figure 7 est une vue similaire à celle de la figure 6 dans laquelle le sommier occupe une position avant ;
- la figure 8 est une vue en coupe transversale selon le plan de coupe 8-8 de la figure 2 qui représente la liaison coulissante longitudinalement entre le sommier et le support du lit ;
- la figure 9 est une vue en couple horizontale qui représente la liaison coulissante verticalement entre le support du lit et la cloison de la cabine d'habitation du véhicule.

### DESCRIPTION DETAILLEE DES FIGURES

Dans la suite de la description, on adoptera à titre non limitatif des orientations longitudinale, dirigée d'arrière en avant, verticale, dirigée de bas en haut, et transversale, dirigée de gauche à droite, indiquées par le trièdre "L,V,T" des figures.

Dans la suite de la description, des éléments présentant une structure identique ou des fonctions analogues seront désignés par des mêmes références.

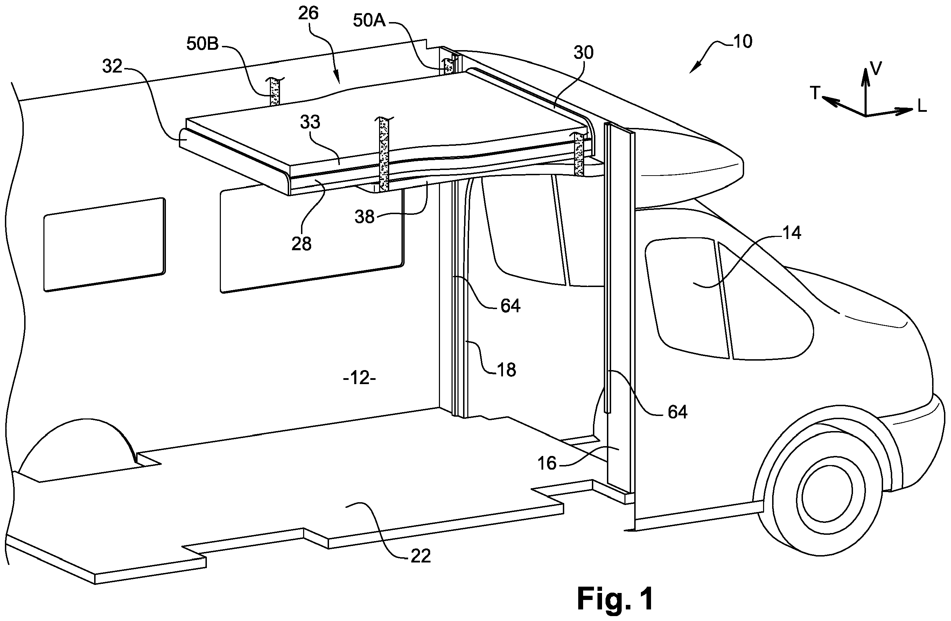

On a représenté à la figure 1 un véhicule 10 roulant, tel qu'un camping-car ou une caravane, qui est susceptible de se déplacer selon une direction longitudinale. Le véhicule 10 renferme une cabine 12 d'habitation.

Il s'agit ici d'un véhicule 10 automobile, tel qu'un camping-car. A cet égard, le véhicule 10 comporte aussi une cabine 14 de pilotage qui est agencée longitudinalement en avant de la cabine 12 d'habitation.

La cabine 12 d'habitation est séparée de la cabine 14 de pilotage par une cloison 16 verticale transversale fixe par rapport au châssis du véhicule. La cloison 16 de séparation est ajourée d'une ouverture 18 centrée transversalement qui permet le passage des utilisateurs entre les deux cabines 12, 14 sans sortir du véhicule.

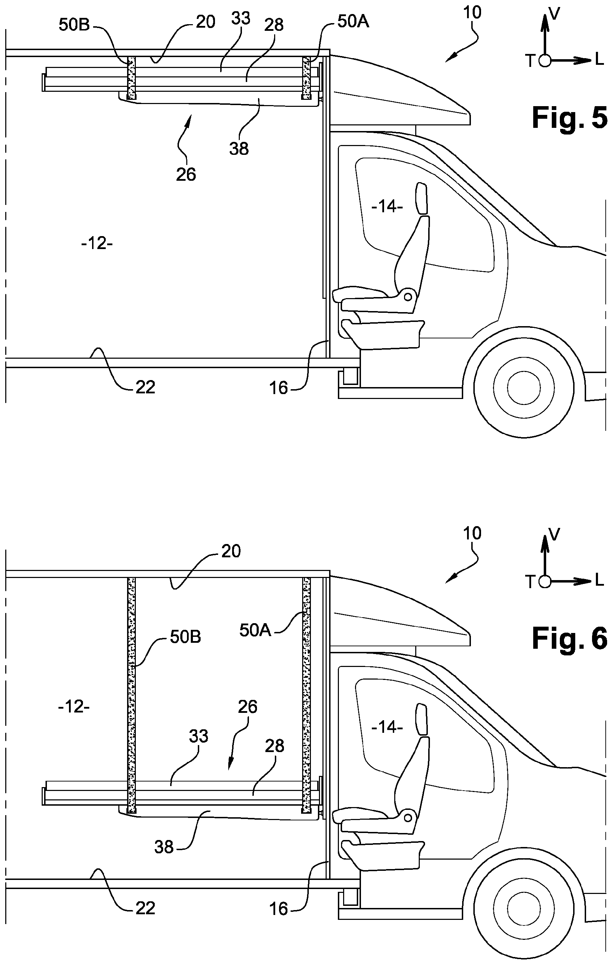

La cabine 12 d'habitation est délimitée verticalement par un plafond 20 supérieur, visible par exemple à la figure 5, et par un plancher 22 inférieur qui sont fixes par rapport au châssis du véhicule 10.

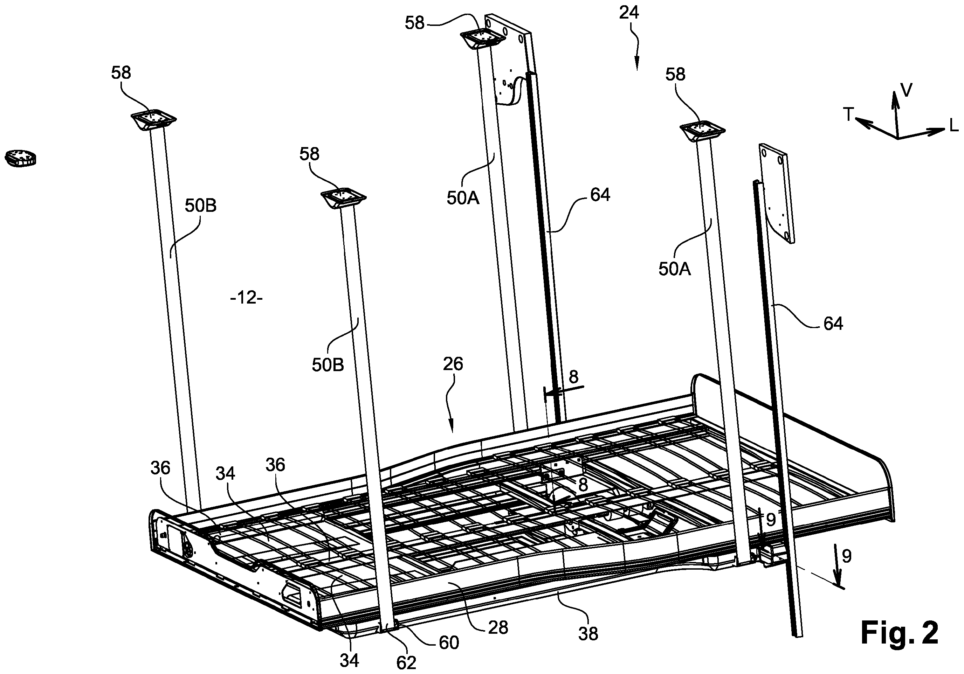

Un ensemble 24 de lit à hauteur réglable est agencé dans la cabine 12 d'habitation du véhicule 10. L'ensemble 24 inclut ainsi un lit 26 comportant un sommier 28 de lit horizontal. Le sommier 28 s'étend selon un axe principal longitudinal depuis une extrémité 30 avant, formant une tête de lit, jusqu'à une extrémité 32 arrière, formant un pied de lit. Le sommier 28 est destiné à supporter un matelas 33 sur lequel les occupants sont destinés à être étendus longitudinalement. Il s'agit ici d'un sommier 28 à lattes 34 transversales qui s'étendent entre des longerons 36 longitudinaux, comme cela est notamment visible aux figures 2, 3, et 4. S'agissant d'un sommier 28 destiné à accueillir deux personnes, il comporte deux rangées longitudinales parallèles de lattes 34 dont l'extrémité intérieur repose sur un longeron 36 central.

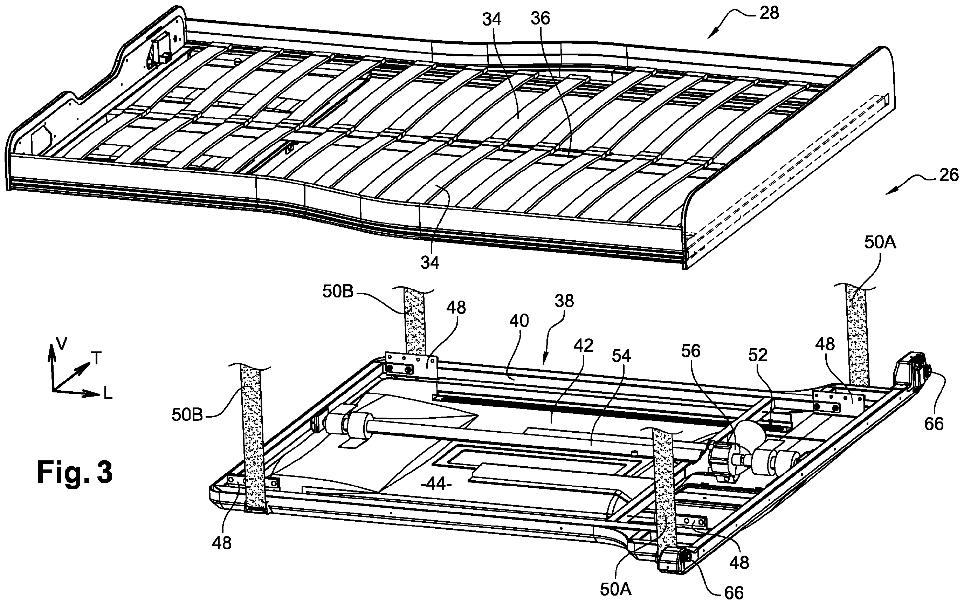

Le sommier 28 est monté coulissant longitudinalement en bloc sur un support 38 horizontal inférieur. Comme représenté à la figure 3, le support 38 comporte un cadre 40 réalisé en profilés métalliques. Le support 38 est fermé par un fond 42 horizontal inférieur qui délimite avec le cadre 40 une cuvette 44. Lorsqu'il est recouvert du sommier 28 la cuvette 44 est fermée supérieurement par le sommier 28. Le support 38 présente ainsi la forme d'un plateau creux.

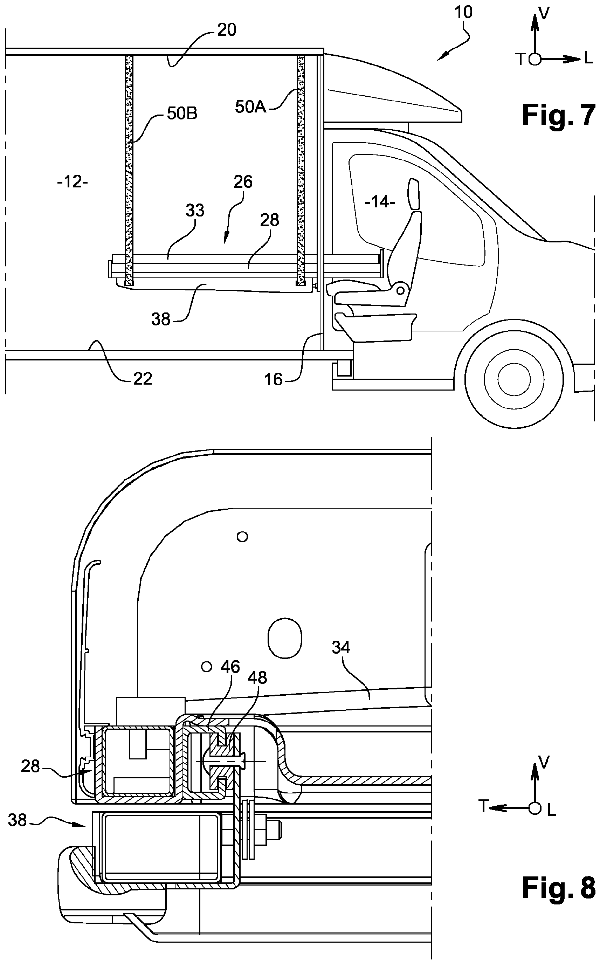

Le sommier 28 est monté coulissant longitudinalement sur le support 38 entre une position extrême arrière de rangement, comme cela est illustré aux figures 5 et 6, et une position extrême avant, comme cela est illustré à la figure 7.

Le support 38 présente une forme globalement rectangulaire. Il présente une largeur transversale sensiblement égale à celle du sommier 28, tandis que sa longueur longitudinale est inférieure à celle du sommier 28. Plus particulièrement, en position extrême arrière de rangement, l'extrémité 30 avant du sommier 28 est globalement alignée avec une extrémité avant du support 38, tandis qu'en position de rangement, l'extrémité 32 arrière du sommier 28 est globalement alignée avec une extrémité arrière du support 38. De cette manière, le support 38 ne fait jamais saillie longitudinalement par rapport au sommier 28. De plus, la cuvette 44 est constamment fermée par le sommier 28 quelle que soit sa position longitudinale par rapport au support 38.

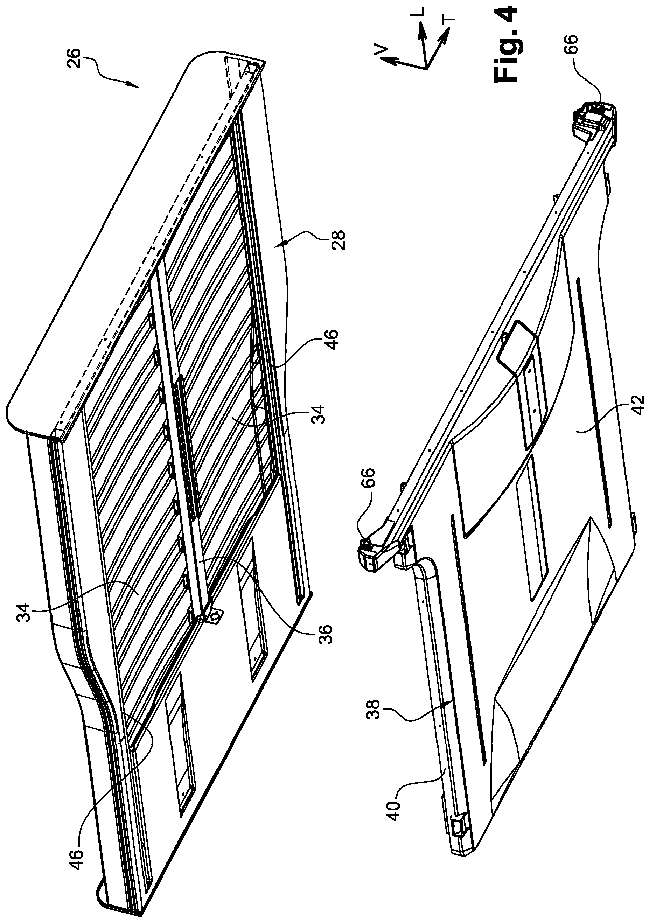

La liaison coulissante est réalisée par l'intermédiaire de deux glissières 46 longitudinales qui sont fixées sous le sommier 28, chacune à proximité d'un bord latéral du sommier 28, comme cela est illustré à la figure 4. Des organes 48 de guidage des glissières 46 sont fixés sur le support 38. Les organes 48 de guidage sont agencés de manière à être engagés dans les glissières 46 pour assurer le guidage en coulissement du sommier 28 par rapport au support 38, comme représenté à la figure 8. Chaque glissière 46 coopère ici avec un organe 48 de guidage avant et avec un organe 48 de guidage arrière.

Les organes 48 de guidage sont formés par des roulements qui permettent de réduire l'effort nécessaire au coulissement longitudinal du sommier 28.

En variante non représentée, les organes de guidage sont formés par des glissières de forme complémentaire des glissières fixées sous le sommier. Le guidage est alors réalisé par glissement et non par roulement.

Le lit 26 est ainsi formé par le sommier 28 et son support 38.

En variante non représentée de l'invention, les organes de guidage sont formés par des patins glissants.

Le support 38 est lui-même monté coulissant verticalement par rapport au châssis du véhicule 10. A cet effet, l'ensemble 24 comporte un mécanisme de levage du support 38 pour déplacer le lit entre une position extrême inférieure d'utilisation, comme cela est illustré aux figure 6 et 7, et une position extrême supérieure d'escamotage dans laquelle le lit 26 est agencé à proximité du plafond 20 pour permettre le passage d'occupants debout, comme cela est illustré aux figures 1 et 5.

Comme représenté à la figure 3, le mécanisme de levage comporte ici deux liens souples 50A avant et deux liens souples 50B arrière. Les liens souples 50A, 50B sont ouverts, c'est-à-dire que chacun d'entre eux comporte deux extrémités terminales.

Quelle que soit sa position verticale, le support 38 est suspendu au plafond 20 au moyen des liens souples 50A, 50B. Pour ce faire, chaque lien souple 50A, 50B présente une résistance à la traction et une rigidité suffisante pour pouvoir supporter, sans rompre ni se déformer, le poids du lit 26 et de ses occupants. Par "suspendu", on comprendra que le poids du lit 26 est supporté uniquement par les liens souples 50A, 50B.

Les liens souples 50A, 50B sont par exemples formés par des sangles, des courroies ou des chaînes. Par "souple", on comprendra que le lien est souple dans au moins un plan, qui est ici un plan vertical longitudinal.

En variante non représentée de l'invention, dans sa position extrême inférieure, les deux extrémités avant et arrière du lit sont supportées par des supports fixes par rapport à la cabine.

Chaque lien souple 50A, 50B comporte un brin de suspension qui est tendu sensiblement verticalement entre le plafond 20 et un bord latéral du support 38.

Chaque lien souple 50A, 50B est associé à un enrouleur 52 qui est apte à diminuer la longueur du brin de suspension par enroulement d'un brin d'extrémité du lien souple 50A, 50B autour d'un arbre 54 afin de commander le coulissement vertical du support 38 entre ses deux positions extrêmes.

Pour que le support 38 demeure horizontal pendant son coulissement, les liens souples 50A, 50B sont enroulés simultanément. A cet effet, l'enrouleur 52 comporte un unique arbre 54 qui est commun aux quatre liens souples 50A, 50B. Ceci est notamment visible à la figure 3.

Dans le mode de réalisation représenté aux figures, l'enrouleur 52 est embarqué dans le support 38. De manière non limitative, l'enrouleur 52 est ici agencé dans la cuvette 44, sous le sommier 28.

Une extrémité terminale supérieure de chaque lien 50A, 50B souple est ancrée au plafond 20 par l'intermédiaire de plaques 58 de fixation, tandis qu'une extrémité terminale inférieure de chaque lien 50A, 50B souple est fixée à un tronçon associé de l'arbre 54 d'enrouleur. Les plaques 58 de fixation sont chacune globalement agencées au droit d'un coin associé du support 38.

L'arbre 54 d'enrouleur est ici centré transversalement dans le support 38. Chaque lien 50A, 50B souple est passé à travers un passant 60 formé dans un bord latéral du support 38, sous un élément 62 de guidage. L'élément de guidage est par exemple formé par un rouleau d'axe longitudinal qui est entraîné en rotation lorsque la longueur du brin de suspension est réduite par enroulement du lien 50A, 50B associé. L'extrémité inférieure de chaque brin de suspension est prolongée par un brin de liaison tendu sensiblement horizontalement entre l'élément de guidage et le brin de lien qui est enroulé sur l'arbre 54.

En variante, l'enrouleur est fixe par rapport à la cabine.

Dans une variante de l'invention, le mécanisme comporte plusieurs arbres d'enroulement, par exemple un premier arbre d'enroulement commun aux deux liens souples avant et un deuxième arbre d'enroulement commun aux deux liens souples arrière. Bien qu'un tel mécanisme soit plus complexe et plus encombrant à réaliser, il permet néanmoins une liberté supplémentaire pour l'agencement de l'enrouleur.

L'enrouleur 52 comporte ici un moteur électrique 56 pour commander la rotation de l'arbre 54 dans les deux sens. L'utilisateur dispose d'une interface de commande (non représentée) permettant de commander l'enrouleur 52 pour descendre ou remonter le lit 26.

Selon une variante non représentée de l'invention, la rotation de l'arbre de l'enrouleur est commandée manuellement par exemple au moyen d'une manivelle.

Le support 38 est agencé entièrement à l'intérieur de la cabine 12 d'habitation. Un bord d'extrémité avant du support 38 et agencé à proximité de la cloison 16 de séparation. Le support 38 est plus particulièrement centré transversalement dans la cabine 12 d'habitation. De ce fait, lorsqu'il quitte sa position extrême supérieure d'escamotage, le lit 26 est agencé en travers de l'ouverture 18. La direction longitudinale du lit 26 est ainsi agencée parallèlement à la direction de déplacement du véhicule 10.

L'ensemble 24 comporte aussi des moyens de guidage du support 38 en coulissement vertical, pour éviter que le lit 26 ne se balance. Comme représenté aux figures 1 et 2, ces moyens de guidage comportent ici deux coulisses 64 verticales qui sont fixées contre une face arrière de la cloison 16 de séparation. Ces deux coulisses 64 sont plus précisément agencées de part et d'autre de l'ouverture 18.

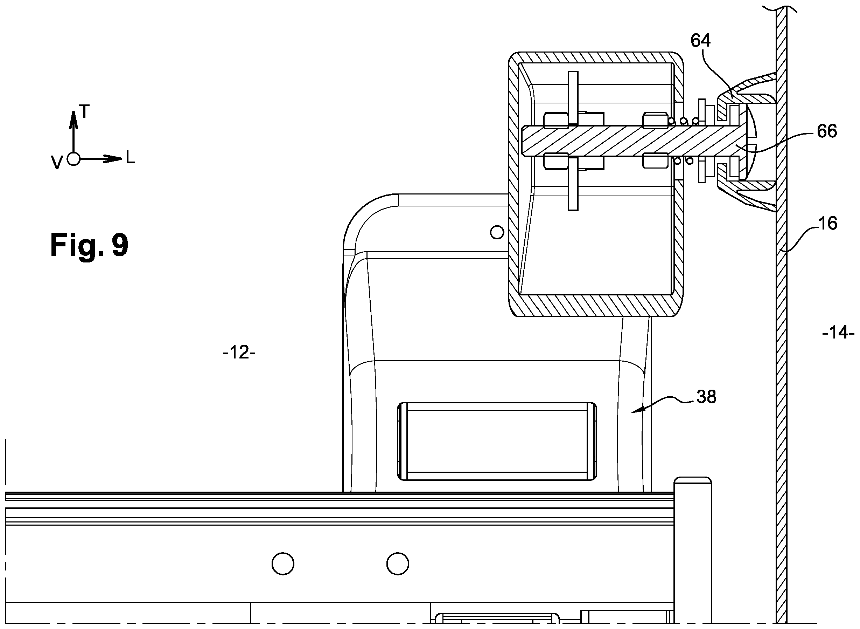

Le bord d'extrémité avant du support 38 comporte deux coulisseaux 66 qui font saillie vers l'avant et qui sont chacun engagé dans une coulisse 64, comme illustré à la figure 9. Ainsi, le support 38, et donc le lit 26, est maintenu transversalement et longitudinalement par rapport à la cloison 16 de séparation.

Lorsqu'il est rangé, le lit 26 est agencé dans sa position extrême supérieure d'escamotage au-dessus de l'ouverture 18 pour permettre aux occupants de circuler librement debout entre la cabine 12 d'habitation et la cabine 14 de pilotage. Dans cette position d'escamotage, le sommier 28 occupe obligatoirement sa position arrière de rangement. En effet, le coulissement vers une position avant est interdit par contact de l'extrémité avant 30 du sommier 28 avec la cloison 16 de séparation.

L'utilisateur commande ensuite le coulissement vertical du support 38, et donc du lit 26, vers une position inférieure d'utilisation désirée. Il peut s'agir de la position extrême inférieure ou d'une position intermédiaire, éventuellement prédéfinie.

Lorsque le lit atteint la position inférieure désirée d'utilisation, l'utilisateur peut alors faire coulisser manuellement le sommier 28 vers sa position avant. Ce faisant, un tronçon d'extrémité avant du sommier 28 passe à travers l'ouverture 18 dans la cabine 14 de pilotage. A cet effet, l'ouverture 18 présente bien entendu une largeur supérieure à celle du sommier 28.

Dans le mode de réalisation représenté aux figures 6 et 7, le coulissement du sommier 28 n'est possible que lorsque des sièges de la cabine 14 de pilotage sont pivotés de manière à être tournés vers l'arrière du véhicule 10. Le tronçon d'extrémité avant du sommier 28 est ainsi agencé au-dessus de l'assise de ces sièges.

Le sommier 28 ainsi coulissé vers l'avant permet avantageusement de libérer une partie de l'espace de vie de la cabine 12 d'habitation.

Bien entendu, il est préférable de ne pas commander le coulissement du lit 26 vers sa position d'escamotage lorsque le sommier 28 occupe sa position avant. Le sommier 28 entrerait alors en collision avec un linteau de l'ouverture 18.

A cet effet, le lit 26 comporte un organe (non représenté) de détection du sommier 28 en position de rangement, le moteur 56 du mécanisme de levage étant désactivé lorsque le sommier 28 quitte sa position de rangement. Il s'agit par exemple d'un interrupteur à poussoir qui est agencé à une extrémité arrière du sommier 28 ou du support 38 de manière à être actionné uniquement lorsque le sommier 28 occupe sa position arrière de rangement.

Bien entendu, l'utilisateur est libre d'utiliser le lit 26 dans une position inférieure d'utilisation même lorsque le sommier 28 en position arrière de rangement.

Ainsi, l'ensemble 24 de lit réalisé selon les enseignements de l'invention est très simple à manipuler par les utilisateurs.

En outre, chaque utilisateur est libre de choisir la position verticale de lit 26, ainsi que la position longitudinale du sommier 28 qui lui conviennent. Ceci permet notamment d'encombrer librement la cabine 12 d'habitation et/ou la cabine 14 de pilotage avec différentes affaires tout en continuant à pouvoir utiliser le lit 26 en toute sécurité.

## Revendications

1. Ensemble (24) de lit (26) à hauteur réglable destiné à être agencé dans une cabine (12) de véhicule, le lit (26) comportant un sommier (28) horizontal s'étendant selon un axe principal longitudinal depuis une extrémité (30) avant jusqu'à une extrémité (32) arrière,
**caractérisé en ce que** le lit (26) comporte un support (38) monté coulissant verticalement sur lequel le sommier (28) est monté coulissant longitudinalement en bloc entre une position arrière de rangement et une position avant.

2. Ensemble (24) selon la revendication précédente, **caractérisé en ce qu'**il comporte un mécanisme (50A, 50B, 52) de levage du support (38) pour déplacer le lit (26) entre une position extrême inférieure d'utilisation et une position extrême supérieure d'escamotage.

3. Ensemble (24) selon la revendication précédente, **caractérisé en ce que** le mécanisme de levage comporte un moteur (56) de commande de la position verticale du lit (26).

4. Ensemble (24) selon la revendication précédente, **caractérisé en ce qu'**il comporte un organe de détection du sommier (28) en position arrière de rangement, le moteur (56) du mécanisme (52) de levage étant désactivé lorsque le sommier (28) quitte sa position de rangement.

5. Ensemble (24) selon l'une quelconque des revendications 2 à 4, **caractérisé en ce que** le support (38) est destiné à être suspendu à un plafond (20) du véhicule (10) par l'intermédiaire de liens (50A, 50B) souples de suspension à longueur réglable.

6. Ensemble (24) selon la revendication précédente, **caractérisé en ce que** le support (38) comporte au moins un enrouleur (52) afin de régler la longueur des liens (50A, 50B) souples pour déplacer le support (38) verticalement.

7. Ensemble (24) selon l'une quelconque des revendications précédentes, **caractérisé en ce qu'**il comporte au moins une coulisse (64) verticale fixe qui guide le support (38) en coulissement vertical.

8. Véhicule (10) qui est susceptible de se déplacer selon une direction déterminée et qui est muni d'un ensemble (24) de lit réalisé selon l'une quelconque des revendications précédentes, **caractérisé en ce que** la direction longitudinale du sommier (28) est agencée parallèlement à la direction de déplacement du véhicule (10).

9. Véhicule (10) selon la revendication précédente, **caractérisé en ce qu'**il comporte deux coulisses (64) de guidage en coulissement vertical du support (38) qui sont fixées à une même cloison (16).

10. Véhicule (10) selon l'une quelconque des revendications 8 ou 9, **caractérisé en ce que** le lit (26) est monté coulissant verticalement entre une position extrême supérieure d'escamotage à proximité du plafond (20) du véhicule (10) dans laquelle le sommier (28) est bloqué dans sa position de rangement par butée contre ladite cloison (16) du véhicule, et au moins une position inférieure d'utilisation dans laquelle le sommier (28) est susceptible de coulisser horizontalement à travers une ouverture (18) réalisée dans ladite cloison (16).

## Patentansprüche

1. Anordnung (24) für ein Bett (26) mit verstellbarer Höhe, das dazu bestimmt ist, in einer Fahrzeugkabine (12) angeordnet zu werden, wobei das Bett (26) einen horizontalen Bettrahmen (28) umfasst, der sich entlang einer Längshauptachse von einem vorderen Ende (30) bis zu einem hinteren Ende (32) erstreckt,
**dadurch gekennzeichnet, dass** das Bett (26) eine Stütze (38) umfasst, die vertikal verschiebbar montiert ist, auf der der Bettrahmen (28) längsverschiebbar im Block zwischen einer hinteren Stauposition und einer vorderen Position montiert ist.

2. Anordnung (24) nach dem vorstehenden Anspruch, **dadurch gekennzeichnet, dass** sie einen Hebemechanismus (50A, 50B, 52) der Stütze (38) umfasst, um das Bett (26) zwischen einer extremen unteren Nutzungsposition und einer extremen oberen Versenkpostion zu bewegen.

3. Anordnung (24) nach dem vorstehenden Anspruch, **dadurch gekennzeichnet, dass** der Hebemechanismus einen Motor (56) zum Steuern der vertikalen Position des Bettes (26) umfasst.

4. Anordnung (24) nach dem vorstehenden Anspruch, **dadurch gekennzeichnet, dass** sie ein Detektionsorgan des Bettrahmens (28) in hinterer Stauposition umfasst, wobei der Motor (56) des Hebemechanismus (52) deaktiviert ist, wenn der Bettrahmen (28) seine Stauposition verlässt.

5. Anordnung (24) nach einem der Ansprüche 2 bis 4, **dadurch gekennzeichnet, dass** die Stütze (38) dazu bestimmt ist, anhand von flexiblen Aufhängungsverbindungen (50A, 50B) mit einstellbarer Länge an einer Decke (20) des Fahrzeugs (10) aufgehängt zu werden.

6. Anordnung (24) nach dem vorstehenden Anspruch, **dadurch gekennzeichnet, dass** die Stütze (38) mindestens einen Aufroller (52) umfasst, um die Länge der flexiblen Verbindungen (50A, 50B) einzustellen, um die Stütze (38) vertikal zu bewegen.

7. Anordnung (24) nach einem der vorstehenden Ansprüche, **dadurch gekennzeichnet, dass** sie mindestens eine feste vertikale Kulisse (64) umfasst, die die Stütze (38) in vertikaler Verschiebung führt.

8. Fahrzeug (10), das geeignet ist, sich in einer bestimmten Richtung fortzubewegen, und das mit einer Bettanordnung (24) versehen ist, die nach einem der vorstehenden Ansprüche gefertigt ist, **dadurch gekennzeichnet, dass** die Längsrichtung des Bettrahmens (28) parallel zur Bewegungsrichtung des Fahrzeugs (10) angeordnet ist.

9. Fahrzeug (10) nach dem vorstehenden Anspruch, **dadurch gekennzeichnet, dass** es zwei Führungskulissen (64) zum vertikalen Verschieben der Stütze (38) umfasst, die an einer selben Wand (16) befestigt sind.

10. Fahrzeug (10) nach einem der Ansprüche 8 oder 9, **dadurch gekennzeichnet, dass** das Bett (26) vertikal verschiebbar zwischen einer extremen oberen Versenkpostion in der Nähe der Decke (20) des Fahrzeugs (10), in der der Bettrahmen (28) in seiner Stauposition per Anschlag an der Wand (16) des Fahrzeugs blockiert ist, und mindestens einer unteren Nutzungsposition montiert ist, in der der Bettrahmen (28) geeignet ist, horizontal durch eine Öffnung (18) hindurch verschoben zu werden, die in der Wand (16) gefertigt ist.

## Claims

1. Bed (26) assembly (24) with adjustable height intended to be arranged in a vehicle cabin (12), the bed (26) including a horizontal bed base (28) extending along a longitudinal main axis from a front end (30) to a rear end (32),
**characterised in that** the bed (26) comprises a support (38) mounted vertically sliding on which the bed base (28) is mounted longitudinally sliding all together between a rear storage position and a front position.

2. Assembly (24) according to the preceding claim, **characterised in that** it includes a mechanism (50A, 50B, 52) for lifting the support (38) for moving the bed (26) between a lower extreme position of use and an upper extreme position of retraction.

3. Assembly (24) according to the preceding claim, **characterised in that** the lifting mechanism includes a motor (56) for controlling the vertical position of the bed (26).

4. Assembly (24) according to the preceding claim, **characterised in that** it includes a member for detecting the bed base (28) in a rear storage position, the motor (56) of the lifting mechanism (52) being deactivated when the bed base (28) leaves its storage position.

5. Assembly (24) according to any one of claims 2 to 4, **characterised in that** the support (38) is intended to be suspended from a ceiling (20) of the vehicle (10) by way of flexible suspension connections (50A, 50B) with an adjustable length.

6. Assembly (24) according to the preceding claim, **characterised in that** the support (38) includes at least one winder (52) in order to adjust the length of the flexible connections (50A, 50B) to move the support (38) vertically.

7. Assembly (24) according to any one of the preceding claims, **characterised in that** it includes at least one fixed vertical slider (64) which guides the support (38) sliding vertically.

8. Vehicle (10) which can be moved along a determined direction and which is provided with a bed assembly (24) according to any one of the preceding claims, **characterised in that** the longitudinal direction of the bed base (28) is arranged parallel to the direction of movement of the vehicle (10).

9. Vehicle (10) according to the preceding claim, **characterised in that** it comprises two guiding sliders (64) vertically sliding the support (38) which are fixed to the same partition wall (16).

10. Vehicle (10) according to any one of claims 8 or 9, **characterised in that** the bed (26) is mounted for vertically sliding between an upper extreme position of retraction in the proximity of the ceiling (20) of the vehicle (10) wherein the bed base (28) is kept in its storage position by abutment against said partition wall (16) of the vehicle, and at least one lower position of use, wherein the bed base (28) is able to slide horizontally through an opening (18) made in said partition wall (16).
